# EUROPEAN PATENT APPLICATION

(11) **EP 2 650 587 A1**
(43) Date of publication of application: **16.10.2013**
(21) Application number: 12175801.5
(22) Date of filing: 10.07.2012
(51) Int. Cl.: F21K 99/00, F21V 8/00

(54) **Illumination module**

(30) Priority: 13.04.2012 TW 101113276
(71) Applicant: Radiant Opto-Electronics Corporation, Kaohsiung (TW)
(72) Inventor: Wu, Yi-Tsuo, Kaohsiung (TW); Chu, Yen-Chuan, Kaohsiung (TW)
(74) Representative: Lang, Christian

(57) **Abstract**

An illumination module is provided, and includes a case, a light-transmitting window and a light source module. The case includes a top plate having an opening. The light-transmitting window covers the opening of the top plate. The light source module includes a light guide element, a first reflective sheet, a second reflective sheet, at least one light source and a fluorescence member. The light guide element includes a light incident surface, a light-exiting surface, a first reflective surface and a second reflective surface. The first reflective sheet and the second reflective sheet are disposed on the first reflective surface and the second reflective surface respectively. A light-emitting surface of the light source faces the light incident surface of the light guide element. At least one section of the fluorescence member faces the light-exiting surface of the light guide element.

## Description

### RELATED APPLICATIONS

This application claims priority to Taiwan Patent Application Serial Number 101113276, filed on April 13, 2012, which is herein incorporated by reference.

### BACKGROUND

### Field of Invention

This application relates to an illumination module, and more particularly to an illumination module with a fluorescence member.

### Description of Related Art

A conventional illumination module often utilizes a tungsten lamp or a fluorescent lamp as a light source. However, the tungsten lamp or the fluorescent lamp has the disadvantages of large power consumption, less illumination efficacy and more heat generating, and thus the conventional light source does not meet the development tendency of modern lighting technologies and environmental requirements.

A LED (Light Emitting Diode) is a common point light source, which has the advantages of high efficacy and more saving power, etc. Thus, the LED is desired to replace the conventional light source to overcome the disadvantages of the conventional skills.

Further, when the LED is desired to be applied to an illumination module with a large area, a lot of LEDs are often required to be disposed therein so as to satisfy the requirements of the illumination module. However, the light-emitting spectrum and intensity of the LEDs are often affected by the distribution of packaging materials including LED chips and phosphor, thus causing the illumination module easily to have non-uniform light color or brightness due to the differences among light-emitting spectrum or intensities of the LEDs.

Moreover, when the LED is desired to be applied to a white light illumination module, a lot of blue LEDs, green LEDs, and red LEDs are needed to be disposed to mix the colored lights emitted by the illumination module to form white light. However, the large amount of LEDs will increase the volume of the illumination module, and thus the illumination module fails to meet the development tendency of lightness and thinness.

There are two methods in the current popular designs of white light illumination module. The first method is to dispose light-emitting materials in encapsulation gel of LEDs, and the second method is to dispose light-emitting materials on a light guide plate. The first method is to excite the light-emitting materials by using the light emitted from the LEDs, such that the light emitted from the LEDs which is not absorbed by the light-emitting materials can be mixed with the light generated by exciting the light-emitting materials to form white light. However, with the increasing of the light emitting time, the photo-conversion efficiency of the light-emitting materials will be easily affected by the heat generated from the LEDs.

The second method may prevent the light-emitting materials from being affected by the heat generated from the LEDs, but if the process for disposing the light-emitting materials on the light guide plate is defected, the light guide plate cannot be used again. In addition, this method needs to use a large amount of light-emitting materials (phosphors) so as to prevent the illumination module from having non-uniform light colors. Thus, the color of the phosphors will affect the visual appearance of the illumination module, and a large amount of the phosphors disposed will greatly increase the manufacture cost of the illumination module.

In view of this, there is a need to provide an illumination module for improving the disadvantages of the conventional illumination module.

### SUMMARY

Therefore, an aspect of the present invention is to provide an illumination module for adjusting light color emitted from the illumination module by utilizing light-emitting materials to satisfy the light color requirements of various illumination modules.

Another aspect of the present invention is to provide an illumination module of which the light-emitting materials do not contact light sources for preventing the photoconversion efficiency from being affected by the heat generated from the light sources, thereby prolonging the operational life of the light-emitting materials.

Yet another aspect of the present invention is to provide an illumination module for using a light guide element to converge light-emitting regions of light sources and to effectively guide the light to a fluorescence member, thereby decreasing the usage amount of the light-emitting materials and improving the visual appearance of the illumination module.

Yet another aspect of the present invention is to provide an illumination module which utilizes a light guide element to sufficiently mix lights emitted from light sources to improve the disadvantages of non-uniform light color or brightness caused by the differences among light-emitting spectrum or intensities of the light sources.

Yet another aspect of the present invention is to provide an illumination module which uses reflective layers to decrease the energy loss of light in the illumination module, so as to increase the light utilization efficiency of the illumination module.

According to the aforementioned aspects of the present invention, an illumination module is provided. In one embodiment, the illumination module includes a case, a light-transmitting window and a light source module. The case includes a top plate having an opening. The light-transmitting window covers the opening of the top plate.

The light source module is disposed in the case. The light source module includes a light guide element, a first reflective sheet, a second reflective sheet, at least one light source and a fluorescence member. The light guide element includes a light incident surface, a light-exiting surface, a first reflective surface and a second reflective surface. The light-exiting surface is opposite to the light incident surface. The first reflective surface is disposed between the light incident surface and the light-exiting surface, and the first reflective surface faces the light-transmitting window. The second reflective surface is opposite to the first reflective surface.

The first reflective sheet and the second reflective sheet are disposed on the first reflective surface and the second reflective surface respectively. A light-emitting surface of the light source faces the light incident surface. At least one section of the fluorescence member faces the light-exiting surface.

According to one embodiment of the present invention, the illumination module further comprises a first reflective layer which is disposed on an inner side of the case.

According to another embodiment of the present invention, the light-transmitting window is a diffusing plate including a plurality of light diffusing particles.

According to yet another embodiment of the present invention, the light guide element is a light guide plate with a uniform thickness.

According to yet another embodiment of the present invention, the number of the at least one light source is more than one, and the light sources have at least one light-emitting wavelength.

According to yet another embodiment of the present invention, the fluorescence member includes a carrier and a plurality of light-emitting materials.

According to yet another embodiment of the present invention, the carrier is formed from a light-transparent material.

According to yet another embodiment of the present invention, the light-emitting materials include at least one photoluminescence material and the at least one photoluminescence material includes but is not limited to a fluorescence material, a phosphorescence material or a combination thereof.

According to yet another embodiment of the present invention, the light-emitting materials are sprayed or coated on a surface of the carrier.

According to yet another embodiment of the present invention, the light-emitting materials are dispersed in the carrier.

According to the aforementioned aspects of the present invention, another illumination module is provided. In one embodiment, the illumination module includes a case, a light-transmitting window and a light source module. The case includes a top plate having an opening. The light-transmitting window covers the opening of top plate.

The light source module is disposed in the case. The light source module includes a light guide element, a first reflective sheet, a second reflective sheet, at least one light source and a fluorescence member. The light guide element includes a light incident surface, a light-exiting surface, a first reflective surface and a second reflective surface. The light-exiting surface is opposite to the light incident surface. The first reflective surface is disposed between the light incident surface and the light-exiting surface, and the first reflective surface faces the light-transmitting window. The second reflective surface is opposite to the first reflective surface.

The first reflective sheet and the second reflective sheet are disposed on the first reflective surface and the second reflective surface respectively. A light-emitting surface of the light source faces the light incident surface. At least one section of the fluorescence member faces the light-exiting surface. The fluorescence member includes a plurality of light-emitting materials. The light-emitting materials include at least one photoluminescence material, in which the photoluminescence material includes but is not limited to a fluorescence material, a phosphorescence material or a combination thereof.

According to one embodiment of the present invention, the fluorescence material includes but is not limited to yttrium aluminum garnet, terbium aluminum garnet, silicate, sulfide, nitride, nitrogen oxide or a combination thereof.

According to yet another embodiment of the present invention, the phosphorescence material includes but is not limited to an ortho-silicate based phosphor, an organic metal complex with heavy metal atoms or a combination thereof.

The light-emitting materials of the illumination module of the present invention do not contact the light sources for preventing the photo-conversion efficiency from being affected by the heat generated from the light sources.

Furthermore, the illumination module may use a light guide element to converge the light-emitting regions of the light sources and to effectively guide the light to a fluorescence member, thereby decreasing the volume of the fluorescence member, thus decreasing the usage amount of the light-emitting materials, further decreasing the manufacture cost and improving the visual appearance of the illumination module. The light guide element also can sufficiently mix the lights emitted from the light sources to improve the disadvantages of non-uniform light color or brightness caused by the difference among the light-emitting spectrum or intensities of the light sources.

Moreover, the illumination module can adjust the light color emitted from the illumination module by utilizing the light-emitting materials, thus satisfying the light color requirements of various illumination modules.

### BRIEF DESCRIPTION OF THE DRAWINGS

The invention can be more fully understood by reading the following detailed description of the embodiment, with reference made to the accompanying drawings as follows:
FIG. 1 is a cross-sectional view of an illumination module according to one embodiment of the present invention; and
FIG. 2 is a cross-sectional view of a portion of an illumination module according to another embodiment of the present invention.

### DETAILED DESCRIPTION

In the following description, several specific details are presented to provide a thorough understanding of the device structures according to embodiments of the present invention. One skilled in the relevant art will recognize, however, that the embodiments of the present invention provide many applicable inventive concepts which can be practiced in various specific contents. The specific embodiments discussed hereinafter are used for explaining but not limited of the scope of the present invention.

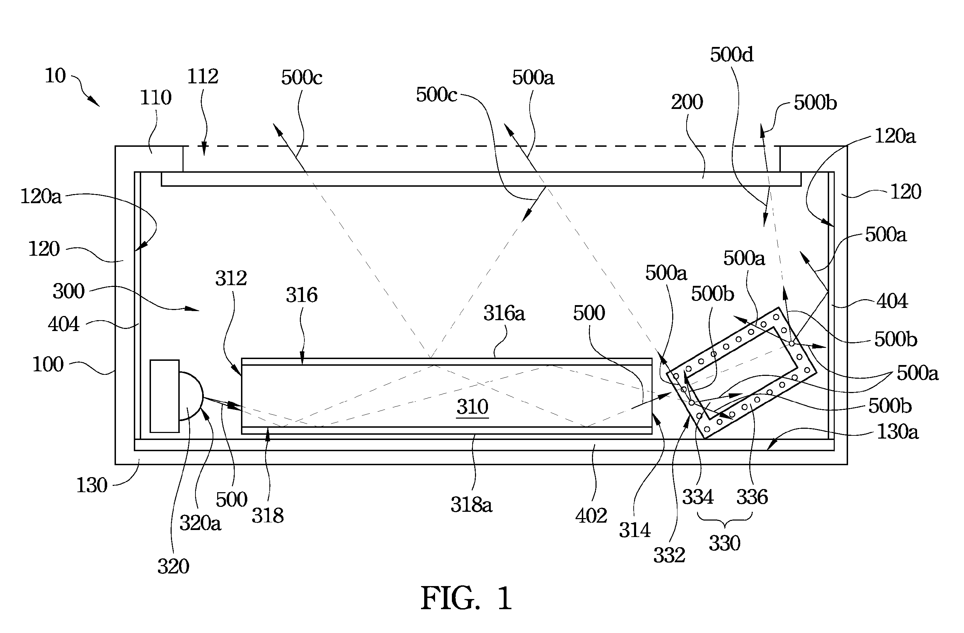

Referring to FIG. 1, FIG. 1 is a cross-sectional view of an illumination module according to one embodiment of the present invention. An illumination module 10 includes a case 100, a light-transmitting window 200 and a light source module 300. The case 100 includes a top plate 110, four side plates 120 and a bottom plate 130. The top plate 110 is opposite to the bottom plate 130, and the side plates 120 are all connected between the top plate 110 and the bottom plate 130, in which the top plate 110 has an opening 112. The light-transmitting window 200 is disposed in the case 100 and covers the opening 112 of the top plate 110. The light-transmitting window 200 is formed from glass, a polymeric material or another material having light-transmitting property. In one embodiment, the light-transmitting window 200 is a diffusing plate, and the diffusing plate includes a plurality of light diffusing particles for increasing the luminance uniformity of the illumination module 10.

The light source module 300 is disposed in the case 100. The light source module 300 includes a light guide element 310, reflective sheets 316a and 318a, one or more light sources 320 and a fluorescence member 330. A light-emitting surface 320a of the light source 320 faces the light incident surface 312 of the light guide element 310 to emit light toward the light guide element 310. The light sources 320 may include a light emitting diode, a laser diode, another suitable point light source or combinations thereof.

The light guide element 310 is a light guide plate with a uniform thickness. In the embodiment, the light guide plate is formed from a polymeric material such as PMMA (Polymethylmethacrylate) or PC (Polycarbonate). The light guide element 310 includes a light incident surface 312, a light-exiting surface 314 and reflective surfaces 316 and 318. The light-exiting surface 314 is opposite to the light incident surface 312. The reflective surface 316 is disposed between the light incident surface 312 and the light-exiting surface 314, and the reflective surface 316 faces the light-transmitting window 200. The reflective surface 318 is opposite to the reflective surface 316, and the reflective surface 318 is also disposed between the light incident surface 312 and the light-exiting surface 314.

The reflective sheets 316a and 318a are respectively disposed on the reflective surfaces 316 and 318 for enabling the light 500 emitted from the light sources 320 to be reflected in the light guide element 310 to prevent the light from entering the light guide element 310 from the reflective surfaces 316 and 318, thereby increasing the light utilization efficiency of the illumination module 10. The reflective sheets 316a and 318a are formed by using a physical vapor deposition (PVD) process, a chemical vapor deposition (CVD), a process of superimposing reflective films or another suitable process.

By using the light guide element 310 and the reflective sheets 316a and 318a disposed on the light guide element 310, the light 500 can be effectively led to the light guide element 310 so as to enable the light 500 to be emitted from the light-exiting surface 314 of the light guide element 310.

The fluorescence member 330 has one or more sections 332 which face the light-exiting surface 314 of the light guide element 310. The fluorescence member 330 can be such as a cube or another shape.

The fluorescence member 330 includes a carrier 334 and a plurality of light-emitting materials 336. The light-emitting materials 336 are disposed on the carrier 334. The carrier 334 is formed from a light-transparent material such as a polymeric material, glass or another suitable material. In the embodiment, the light-emitting materials 336 may include one or more photoluminescence materials for adjusting the light color emitted from the light source module 300, thereby satisfying the requirements of the illumination module 10. In one embodiment, the photoluminescence material includes but is not limited to a fluorescence material, a phosphorescence material, another suitable photoluminescence material or a combination thereof.

In the embodiment, the fluorescence material includes but is not limited to YAG (Yttrium Aluminum Garnet), TAG (Terbium Aluminum Garnet), silicate such as Ba₂SiO₄:Eu²⁺, Sr₄Si³O₈Cl₄:Eu²⁺ and BaSi₂O₅:Pb²⁺, sulfide such as Ba₂ZnS₃:Ce³⁺, nitride such as CaAlSiN₃:Eu²⁺ and CaAlSiN₃, nitrogen oxide such as Ba₃Si₆O₁₂N₂:Eu and SrSi₂O₂N₂, another suitable fluorescence material or a combination thereof. In the embodiment, the phosphorescence material includes but is not limited to an ortho-silicate based phosphor, an organic metal complex with heavy metal atoms such as transition metal atoms, another suitable phosphorescence material or a combination thereof.

For satisfying the absorption wavelength ranges of the aforementioned photoluminescence materials and the light color and light-emitting intensity of the illumination module, the number of the light sources 320 may be more than one, and the light sources 320 may have one or more light-emitting wavelengths.

The illumination module 10 may selectively include reflective layers 402 and 404. The reflective layer 402 is disposed on an inner side 130a of the bottom plate 130, and the reflective layers 404 are disposed on respective inner sides 120a of the side plates 120. The reflective layers 402 and 404 can prevent the energy loss of the light in the case 100, thereby increasing the light utilization efficiency of the illumination module 10.

In the illumination module 10, the light 500 emitted from the light sources 320 enters the light guide element 310 from the light incident surface 312. The light 500 is reflected in the light guide element 310, and then leaves the light guide element 310 from the light-exiting surface 314. The light 500 emitted from the light guide element 310 illuminates the light-emitting materials 336, in which a portion of the light 500 is absorbed by the light-emitting materials 336, and thus the light-emitting materials 336 are excited from a ground state to an excited state. When returning to the ground state from the excited state, the light-emitting materials 336 emit excited light 500a. The other portion of the light 500 which is not absorbed by the light-emitting materials 336 is reflected to form a reflected light 500b or passes through the carrier 334, and is mixed with the excited light 500a to form a mixed light.

When the light 500a and 500b illuminate the reflective layers 402 and 404, the reflective layers 402 and 404 can reflect the light 500a and 500b to prevent the energy loss of the light 500a and 500b, thereby increasing the light utilization efficiency of the illumination module 10.

When the light 500a and the light 500b illuminate the light-transmitting window 200, portions of the light 500a and the light 500b pass through and are emitted from the light-transmitting window 200. Other portions of the light 500a and the light 500b are reflected by the light-transmitting window 200 to form reflected light 500c and reflected light 500d respectively. Then, by using the reflective sheets 316a and 318a and the reflective layers 402 and 404, the light 500c and the light 500d can be reflected till to be emitted from the light-transmitting window 200. Besides, when the reflected light 500d illuminates the light-emitting materials 336, the light-emitting materials 336 may be excited again to emit the excited light and the reflected light, thereby increasing the light utilization efficiency of the illumination module 10.

Hence, the light color emitted from the illumination module 10 is the light color of the light 500a mixed with the light 500b, the light 500c and the light 500d. Therefore, by utilizing the carrier 334 with different light-emitting materials, the light color and the light-emitting intensity of the illumination module 10 can be adjusted to satisfy the light color and brightness requirements of various illumination modules.

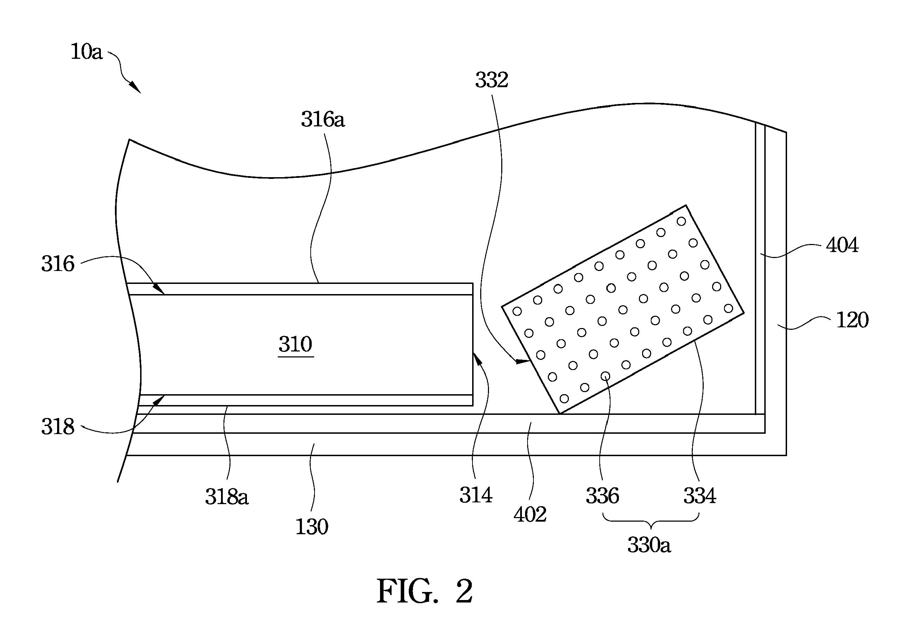

Referring to FIG. 2, FIG. 2 is a cross-sectional view of a portion of an illumination module according to another embodiment of the present invention. An illumination module 10a is substantially similar to the illumination module 10 in structure, but the difference therebetween resides in that the light-emitting materials 336 of the illumination module 10a are blended with the material forming the carrier 334, and then the carrier 334 is formed by injection molding, extrusion molding, compression molding or another molding process, such that the light-emitting materials 336 are uniformly dispersed in the carrier 334.

It cab be known from the aforementioned embodiments that, the light-emitting materials of the present invention do not contact the light sources, such that the photo-convention efficiency can be prevented from being affected by the heat generated from the light sources, thereby prolonging the operational life of the light-emitting materials.

The present invention may also use a light guide element to converge the light-emitting regions of the light sources and to effectively guide the light to the fluorescence member, thus ensuring that all of the light emitted from the light sources illuminates the light-emitting materials in the fluorescence member. Hence, the present invention can decrease the volume of the fluorescence member, thus decreasing the usage amount of the light-emitting materials, further decreasing the manufacture cost and increasing the visual appearance of the illumination module. Furthermore, the light guide element can sufficiently mix the lights emitted from the respective light sources to decrease the deficiencies of the non-uniform color or brightness caused by the difference among the light-emitting spectrum or intensities of the illumination module.

Moreover, the present invention can adjust the light color emitted from the illumination module by utilizing the photoluminescence materials, so as to satisfy the requirements of various requirements. Moreover, a semiconductor light-emitting element such as a LED can be used as the light source of the present invention to enable the light source module to have advantages of high brightness, power saving and light weigh, etc., thereby meeting the development tendency of modern technologies and environmental requirements, and improving the disadvantages of the conventional illumination module.

As is understood by a person skilled in the art, the foregoing embodiments of the present invention are illustrative of the present invention rather than limiting of the present invention. It is intended to cover various modifications and similar arrangements included within the spirit and scope of the appended claims, the scope of which should be accorded with the broadest interpretation so as to encompass all such modifications and similar structures.

## Claims

1. An illumination module, comprising:
a case comprising a top plate having an opening;
a light-transmitting window covering the opening of the top plate; and
a light source module disposed in the case, wherein the light source includes:
a light guide element, comprising:
a light incident surface;
a light-exiting surface opposite to the light incident surface;
a first reflective surface disposed between the light incident surface and the light-exiting surface, wherein the first reflective surface faces the light-transmitting window; and
a second reflective surface opposite to the first reflective surface;
a first reflective sheet disposed on the first reflective surface;
a second reflective sheet disposed on the second reflective surface;
at least one light source of which a light-emitting surface faces the light incident surface of the light guide element; and
a fluorescence member of which at least one section faces the light-exiting surface of the light guide element.

2. The illumination module of claim 1, wherein the illumination module further comprises a first reflective layer which is disposed on an inner side of the case.

3. The illumination module of claim 1, wherein the light-transmitting window is a diffusing plate including a plurality of light diffusing particles.

4. The illumination module of claim 1, wherein the light guide element is a light guide plate with a uniform thickness.

5. The illumination module of claim 1, wherein the number of the at least one light sources is more than one, and the light sources have at least one light-emitting wavelength.

6. The illumination module of claim 1, wherein the fluorescence member includes a carrier and a plurality of light-emitting materials.

7. The illumination module of claim 6, wherein the carrier is formed from a light-transparent material.

8. The illumination module of claim 6, wherein the light-emitting materials include at least one photoluminescence material and the at least one photoluminescence material is selected from the group consisting of a fluorescence material, a phosphorescence material and a combination thereof.

9. The illumination module of claim 8, wherein the fluorescence material is selected from the group consisting of yttrium aluminum garnet, terbium aluminum garnet, silicate, sulfide, nitride, nitrogen oxide and a combination thereof.

10. The illumination module of claim 8, wherein the phosphorescence material is selected from the group consisting of ortho-silicate based phosphor, organic metal complex with heavy metal atoms and a combination thereof.

11. The illumination module of claim 6, wherein the light-emitting materials are sprayed or coated on a surface of the carrier.

12. The illumination module of claim 6, wherein the light-emitting materials are dispersed in the carrier.

13. The illumination module of claim 1, 9 or 10, wherein
the fluorescence member includes:
a plurality of light-emitting materials comprising at least one photoluminescence material, wherein the at least one photoluminescence material is selected from the group consisting of a fluorescence material, a phosphorescence material and a combination thereof.
